# EUROPEAN PATENT APPLICATION

(11) **EP 2 667 383 A1**
(43) Date of publication of application: **27.11.2013**
(21) Application number: 12737180.5
(22) Date of filing: 18.01.2012
(51) Int. Cl.: G21C 15/02

(54) **PRESSURIZED-WATER REACTOR**

(30) Priority: 19.01.2011 JP 2011008688
(71) Applicant: Kabushiki Kaisha Toshiba, Minato-ku Tokyo 105-8001 (JP)
(72) Inventor: UCHIDA, Ken, Tokyo 105-8001 (JP); OKUDA, Ken, Tokyo 105-8001 (JP); AOKI, Kazuyoshi, Tokyo 105-8001 (JP); IKEDA, Hiroshi, Tokyo 105-8001 (JP); IWAKI, Chikako, Tokyo 105-8001 (JP); YAMAMOTO, Tetsuzo, Tokyo 105-8001 (JP)
(74) Representative: Granleese, Rhian Jane
(86) International application number: PCT/JP2012/000277
(87) International publication number: WO 2012/098874

(57) **Abstract**

A pressurized water reactor comprises a reactor pressure vessel (11), a cylindrical core barrel (13), a core disposed in the core barrel (13), a lower core support plate (17), and a cylindrical porous plate (31). The core barrel (13) is provided in the reactor pressure vessel (11) and forms, with the inner side surface of the reactor pressure vessel (11), an annular downcomer (14) therebetween. The lower core support plate (17) is provided under the core so as to extend horizontally, and a large number of upward flow holes (80) are formed therein. The cylindrical porous plate (31) demarcates a lower plenum (16) and a bottom part of the downcomer (14), and a plurality of inward flow holes (83) that serve as flow paths from the bottom part of the downcomer (14) to the lower plenum (16) are formed therein. The inward flow holes (83) are inclined upward to the lower plenum (18) on the side on which the inward flow holes are open to the lower plenum (16).

## Description

### TECHNICAL FIELD

The present invention relates to a pressurized water reactor.

### BACKGROUND ART

As described in, e.g., Patent Document 1, in a conventional typical pressurized water reactor, coolant flows into the reactor pressure vessel through the inlet nozzles and flows down in the downcomer which is an annular flow path provided between the inner surface of the reactor pressure vessel and the outer surface of the core barrel. The coolant that has reached the lower end of the downcomer passes through the entrance of the lower plenum, then shifts to upward flow in the lower plenum, passes through a large number of upward flow-through holes, and reaches the core in which fuel assemblies are installed. The coolant is increased in temperature while flowing up in the core, passes through the upper plenum, and flows outside the reactor pressure vessel through the outlet nozzles. The coolant that has flowed outside the reactor pressure vessel through the outlet nozzle is guided to a steam generator.

The flow path from the inlet nozzle to the core is designed so as to eliminate a factor that causes occurrence of swirl or collision of a flow to a maximum extent and thus to stably uniformize the flow rate of the coolant flowing into each fuel assembly. To this end, for example, a swirl suppression plate is installed in the lower plenum.

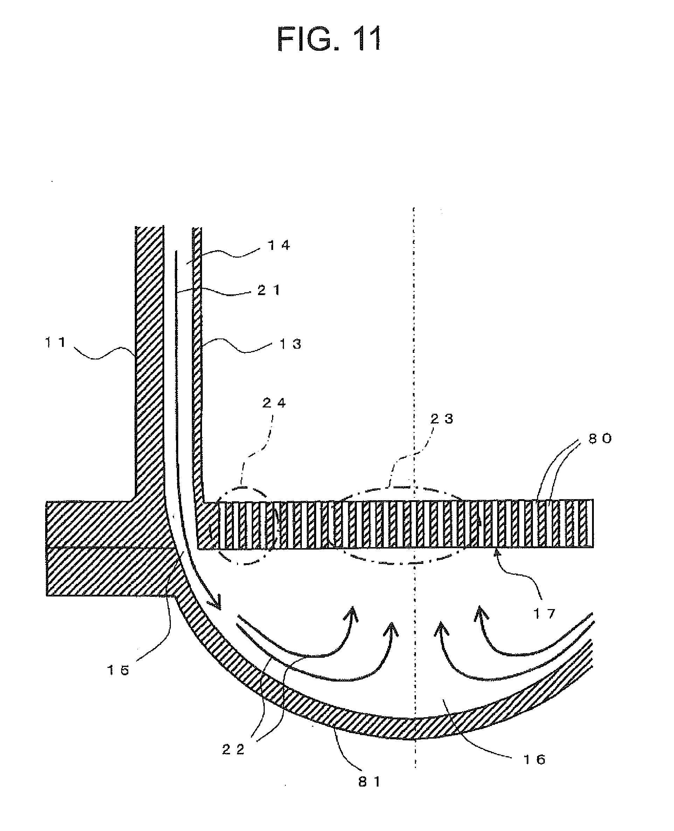

The flow of the coolant will be described with reference to FIG. 11 which illustrates a portion around the entrance of the lower plenum in a conventional typical pressurized water reactor. FIG. 11 is a fragmentary elevational cross-sectional view illustrating only a left side of an elevational cross section of a lower portion of a reactor pressure vessel of a conventional pressurized water reactor.

A flow 21 of the coolant flowing down in a downcomer 14 passes through a lower plenum entrance 15 and flows into a lower plenum 16. A decrease in a width of the lower plenum entrance 15 increases a flow speed of the coolant flowing into the lower plenum 16, resulting in an increase in inertia. With this inertia, the flow 22 in the lower plenum 16 has a tendency that the high-speed side flow goes down along an inner wall surface of the reactor pressure vessel bottom portion 81 constituting the lower plenum 16 and then goes toward the center of the core bottom, as illustrated in FIG. 11. This flow tendency causes a distribution in which the flow rate of the coolant passing upward through the lower core support plate 17 is increased at the center portion 23. That is, of all fuel assemblies disposed above the lower core support plate 17, fuel assemblies located near the center tend to receive a larger flow rate of the coolant than those located at the peripheral portion.

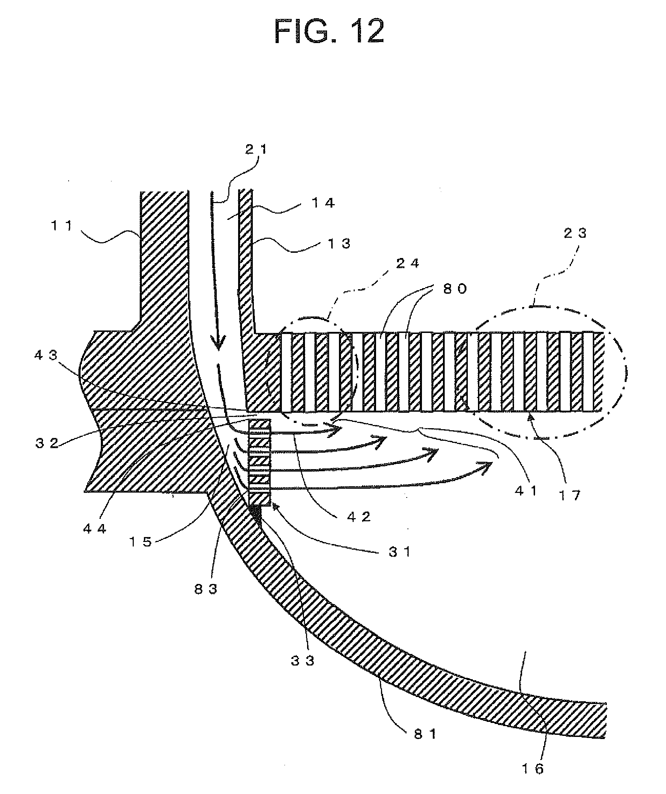

To alleviate such a non-uniformity of the core flow rate distribution, a cylindrical porous plate 31 having a large number of inward flow holes 83 (radial direction through holes) can be installed at the lower plenum entrance 15 as illustrated in FIG. 12. The cylindrical porous plate 31 is typically fixed to the bottom portion 81 of the reactor pressure vessel through a support member 33. Although a slight gap 32 exists between the lower core support plate 17 and the cylindrical porous plate 31, the upper-side corner portion 43 of the entrance of the gap 32 and the lower-side corner portion 44 thereof are flush with each other in a radial direction, so that no step is formed therebetween.

In a case where the cylindrical porous plate 31 is installed, the flow 21 going down in the downcomer 14 turns inward in the radial direction at the lower plenum entrance 15, passes through the inward flow holes 83 of the cylindrical porous plate 31, and flows into the lower plenum 16 as a radial-direction inward flow 41. The flow diffuses when passing through the inward flow holes 83 of the cylindrical porous plate 31, and the flow goes horizontally in the vicinity of the lower core support plate 17, so that the flow 22 converging toward the center portion 23 as illustrated in FIG. 11 becomes difficult to occur to alleviate the tendency that the flow rate of the coolant to be supplied to the fuel assemblies located near the center portion is increased.

### PRIOR ART DOCUMENTS

### PATENT DOCUMENTS

Patent Document 1: Japanese Patent Application Laid-Open Publication No. 08-62372

### DISCLOSURE OF THE INVENTION

### PROBLEMS TO BE SOLVED BY THE INVENTION

As illustrated in FIG. 12, a flow 42 discharged from upper ones of the inward flow holes 83 of the above conventional cylindrical porous plate 31 becomes a flow traversing in the vicinity of lower ends of upward flow holes 80 located at a peripheral portion 24 of the lower core support plate 17. In this case, a force in a suction direction is applied to the lower ends of the upward flow holes 80 located at the peripheral portion 24 by the Venturi effect. More specifically, a force in a direction that causes the fluid in the upward flow holes 80 to move downward is applied. As described above, the cylindrical porous plate 31 has a drawback that it reduces the flow rate of the coolant to be supplied to the fuel assemblies located at the peripheral portion.

The present invention has been made to solve the above problem, and an object thereof is to reduce, in a pressurized water reactor, deviation in the flow rate of the coolant to be supplied to the fuel assemblies in a radial direction distribution.

In order to achieve the object, according to an embodiment of an aspect of the present invention, there is presented a pressurized water reactor comprising: a cylindrical reactor pressure vessel with its axis extending in a vertical direction, the reactor pressure vessel including a vessel bottom portion protruding downward and an inlet nozzle mounted to a side surface thereof; a cylindrical core barrel provided in the reactor pressure vessel so as to form an annular downcomer between itself and an inner side surface of the reactor pressure vessel; a core disposed in the core barrel; a lower core support plate provided below the core so as to spread horizontally across a lower portion of the core barrel and having a large number of upward flow holes formed therein; and a cylindrical porous plate disposed as a partition between a lower plenum contacting the vessel bottom portion and a bottom portion of the downcomer and having a plurality of inward flow holes each serving as a flow path from the bottom portion of the downcomer to the lower plenum, at least some of the inward flow holes being inclined at least upward toward the lower plenum on a side at which they are opened to the lower plenum.

According to an embodiment of another aspect of the present invention, there is presented a pressurized water reactor comprising: a cylindrical reactor pressure vessel with its axis extending in a vertical direction, the reactor pressure vessel including a vessel bottom portion protruding downward and an inlet nozzle mounted to a side surface thereof; a cylindrical core barrel provided in the reactor pressure vessel so as to form an annular downcomer between itself and an inner side surface of the reactor pressure vessel; a core disposed in the core barrel; a lower core support plate provided below the core so as to spread horizontally across a lower portion of the core barrel and having a large number of upward flow holes formed therein; and a cylindrical porous plate disposed as a partition between a lower plenum contacting the vessel bottom portion and a bottom portion of the downcomer and having a plurality of inward flow holes each serving as a flow path extending from the bottom portion of the downcomer to the lower plenum, the cylindrical porous plate having a step protruding toward the downcomer side and extending in a peripheral direction.

According to an embodiment of another aspect of the present invention, there is presented a pressurized water reactor comprising: cylindrical reactor pressure vessel with its axis extending in a vertical direction, the reactor pressure vessel including a vessel bottom portion protruding downward and an inlet nozzle mounted to a side surface thereof; a cylindrical core barrel provided in the reactor pressure vessel so as to form an annular downcomer between itself and an inner side surface of the reactor pressure vessel; a core disposed in the core barrel; a lower core support plate provided below the core so as to spread horizontally across a lower portion of the core barrel and having a large number of upward flow holes formed therein; and a cylindrical porous plate disposed as a partition between a lower plenum contacting the vessel bottom portion and a bottom portion of the downcomer and having a plurality of inward flow holes each serving as a flow path extending from the bottom portion of the downcomer to the lower plenum, and wherein an annular gap extending horizontally so as to serve as a flow path from the bottom portion of the downcomer to the lower plenum is formed between the lower core support plate and an upper end portion of the cylindrical porous plate, and at least the lower plenum side of the gap is inclined upward toward the lower plenum.

According to an embodiment of another aspect of the present invention, there is presented a pressurized water reactor comprising: a cylindrical reactor pressure vessel with its axis extending in a vertical direction, the reactor pressure vessel including a vessel bottom portion protruding downward and an inlet nozzle mounted to a side surface thereof; a cylindrical core barrel provided in the reactor pressure vessel so as to form an annular downcomer between itself and an inner side surface of the reactor pressure vessel; a core disposed in the core barrel; a lower core support plate provided below the core so as to spread horizontally across a lower portion of the core barrel and having a large number of upward flow holes formed therein; and a cylindrical porous plate disposed as a partition between a lower plenum contacting the vessel bottom portion and a bottom portion of the downcomer and having a plurality of inward flow holes each serving as a flow path extending from the bottom portion of the downcomer to the lower plenum, and wherein an annular gap extending horizontally so as to serve as a flow path from the bottom portion of the downcomer to the lower plenum is formed between the lower core support plate and an upper end portion of the cylindrical porous plate, and an outer periphery of the upper end portion of the cylindrical porous plate protrudes outward from an outer periphery of a lower end portion of the lower core support plate.

### ADVANTAGES OF THE INVENTION

According to the present invention, it is possible to reduce, in a pressurized water reactor, deviation in the flow rate of the coolant to be supplied to the fuel assemblies in a radial direction distribution.

### BRIEF DESCRIPTION OF THE DRAWINGS

FIG. 1 is a fragmentary elevational cross-sectional view illustrating only a left side of an elevational cross section of a lower portion of a reactor pressure vessel of a first embodiment of a pressurized water reactor according to the present invention.
FIG. 2 is an elevational cross-sectional view illustrating an inside of the reactor pressure vessel of the first embodiment of the pressurized water reactor according to the present invention.
FIG. 3 is an enlarged elevational cross-sectional view illustrating only a left side of an elevational cross section of a cylindrical porous plate of FIG. 1.
FIG. 4 is a fragmentary elevational cross-sectional view illustrating only a left side of an elevational cross section of a lower portion of the reactor pressure vessel of a second embodiment of the pressurized water reactor according to the present invention.
FIG. 5 is an enlarged elevational cross-sectional view illustrating only a left side of an elevational cross section of a cylindrical porous plate of FIG. 4.
FIG. 6 is an enlarged elevational cross-sectional view illustrating only a left side of an elevational cross section of a cylindrical porous plate of a third embodiment of the pressurized water reactor according to the present invention.
FIG. 7 is a fragmentary elevational cross-sectional view illustrating only a left side of an elevational cross section of a lower portion of the reactor pressure vessel of a fourth embodiment of the pressurized water reactor according to the present invention.
FIG. 8 is an enlarged elevational cross-sectional view illustrating only a left side of an elevational cross section of a cylindrical porous plate of FIG. 7.
FIG. 9 is a fragmentary elevational cross-sectional view illustrating only a left side of an elevational cross section of a lower portion of the reactor pressure vessel of a fifth embodiment of the pressurized water reactor according to the present invention.
FIG. 10 is a fragmentary elevational cross-sectional view illustrating only a left side of an elevational cross section around a cylindrical porous plate of a sixth embodiment of the pressurized water reactor according to the present invention.
   FIG. 11 is a fragmentary elevational cross-sectional view illustrating only a left side of an elevational cross section of a lower portion of a reactor pressure vessel of a conventional pressurized water reactor.
   FIG. 12 is a fragmentary elevational cross-sectional view illustrating only a left side of an elevational cross section of a lower portion of a reactor pressure vessel of a conventional pressurized water reactor, which illustrates a different example from FIG. 11.

### EMBODIMENTS FOR CARRYING OUT THE INVENTION

Embodiments of a pressurized water reactor according to the present invention will be described with reference to the accompanying drawings.

### (FIRST EMBODIMENT)

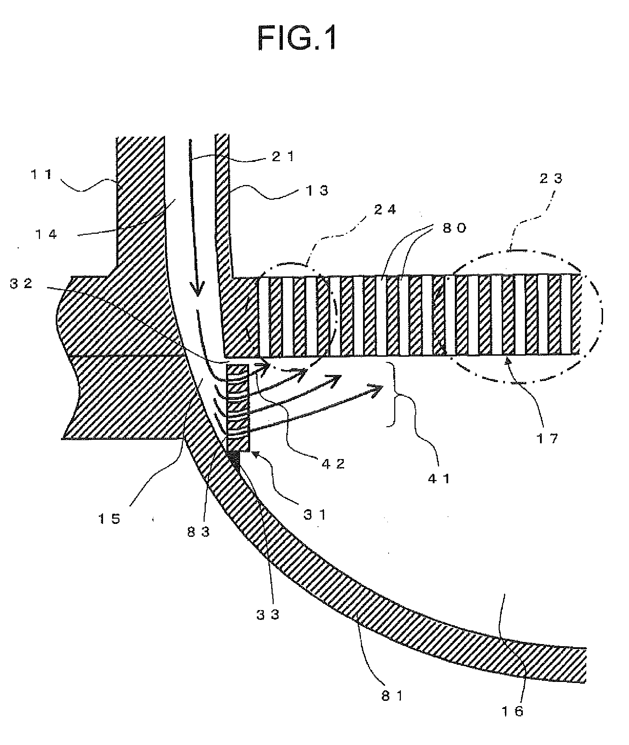

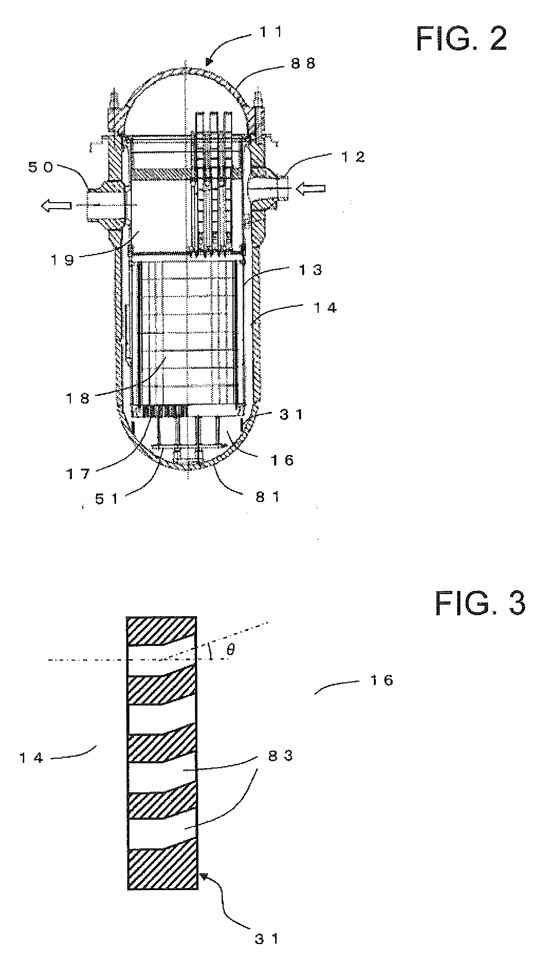

FIG. 1 is a fragmentary elevational cross-sectional view illustrating only a left side of an elevational cross section of a lower portion of a reactor pressure vessel of a first embodiment of a pressurized water reactor according to the present invention. FIG. 2 is an elevational cross-sectional view illustrating an inside of the reactor pressure vessel of the first embodiment of the pressurized water reactor according to the present invention. FIG. 3 is an enlarged elevational cross-sectional view illustrating only a left side of an elevational cross section of a cylindrical porous plate of FIG. 1.

A pressurized water reactor according to the first embodiment includes a reactor pressure vessel 11, a core barrel 13 accommodated in the reactor pressure vessel 11, and a core 18 disposed in the core barrel 13. A plurality of fuel assemblies are accommodated in the core 18.

The reactor pressure vessel 11 is a circular cylindrical vessel with its axis extending in the vertical direction. A bottom portion 81 of the reactor pressure vessel 11 protrudes downward in a semispherical shape and has a lower plenum 16 formed therein. An openable lid 88 is mounted to the top portion of the reactor pressure vessel 11.

The core barrel 13 has a circular cylindrical shape with its axis extending in the vertical direction. An annular downcomer 14 is formed between the outer wall of the core barrel 13 and the inner wall of the reactor pressure vessel 11.

Inlet nozzles 12 and outlet nozzles 50 are mounted to the side surface of the reactor pressure vessel 11. An upper plenum 19 is formed above the core barrel 13. A disk-shaped lower core support plate 17 extending in the horizontal direction is mounted to the lower end portion of the core barrel 13 so as to cover the lower end portion of the core barrel 13. A large number of upward flow holes 80 are formed in the lower core support plate 17.

A swirl suppression plate 51 for stabilizing and uniformizing the flow of the coolant that passes through the upward flow holes 80 of the lower core support plate 17 and goes into the fuel assemblies is disposed in the lower plenum 16. In FIG. 1, illustration of the swirl suppression plate 51 of FIG. 2 is omitted.

The bottom portion of the downcomer 14 serves as a lower plenum entrance 15 through which the coolant flowing down in the downcomer 14 flows into the lower plenum 16. A circular cylindrical porous plate 31 is disposed at the lower plenum entrance 15. The cylindrical porous plate 31 is supported by the bottom portion 81 of the reactor pressure vessel 11 through an annular support member 33. The cylindrical porous plate 31 is disposed below the lower core support plate 17 and along the outer periphery thereof. A large number of inward flow holes 83 are formed in the cylindrical porous plate 31.

An annular gap 32 is formed between the lower surface of the lower core support plate 17 in the vicinity of the outer periphery thereof and the upper end of the cylindrical porous plate 31.

The inward flow holes 83 each have a curved portion in the middle thereof, and there is a difference in inclination between the downcomer 14 side (outer side, flow-in side) and the lower plenum 16 side (inner side, flow-out side). In the example of FIG. 3, the inward flow holes 83 each have a configuration in which the downcomer 14 side thereof extends horizontally and the lower plenum 16 side thereof extends upward at an angle θ toward the lower plenum 16.

In the first embodiment having the configuration described above, the coolant flows in the reactor pressure vessel 11 through the inlet nozzle 12 and flows down in the downcomer 14. The coolant that has reached the lower end of the downcomer flows in the lower plenum entrance 15, that is, passes through the inward flow holes 83 of the cylindrical porous plate 31 and the annular gap 32 to flow into the lower plenum 16. Thereafter, the coolant shifts to an upward flow in the lower plenum 16, passes through the upward flow holes 80 of the lower core support plate 17, and reaches the core 18. The coolant is increased in temperature while flowing up in the core 18, passes through the upper plenum 19 and flows outside the reactor pressure vessel 11 through the outlet nozzles 50. The coolant that has flowed outside the reactor pressure vessel through the outlet nozzles 50 is guided to a not-illustrated steam generator.

According to the present embodiment, in the pressurized water reactor, deviation in the flow rate of the coolant to be supplied to the fuel assemblies in a radial direction distribution can be reduced.

In the present embodiment, the inward flow holes 83 of the cylindrical porous plate 31 each extends upward at the angle θ on the flow-out side, i.e., the lower plenum 16 side. Thus, in the lower plenum 16, the flow of the coolant that has passed through the inward flow holes 83 goes upward toward the center of the lower plenum 16. This allows the coolant to easily flow in the upward flow holes 80 located at the peripheral portion 24, so that it is possible to suppress a reduction in the flow rate of the coolant to be supplied to the fuel assemblies located at the peripheral portion without generating the Venturi effect.

Further, in the present embodiment, the inward flow holes 83 of the cylindrical porous plate 31 each extend horizontally on the flow-in side, i.e., the downcomer 14 side, so that the coolant flows more smoothly than in a case where the inward flow holes 83 are inclined over the entire length thereof toward the lower plenum 16, thereby achieving a reduction in a pressure loss.

In producing the cylindrical porous plate 31, when a hole is drilled in a cylindrical structural member, a drill is inserted horizontally on the outer side (left side in FIG. 3) to drill out half of the plate thickness and then the drill inserted obliquely from above on the inner side (right side in FIG. 3) to drill the remaining half thereof. As described above, the cylindrical porous plate 31 of the present embodiment is easily produced.

### (SECOND EMBODIMENT)

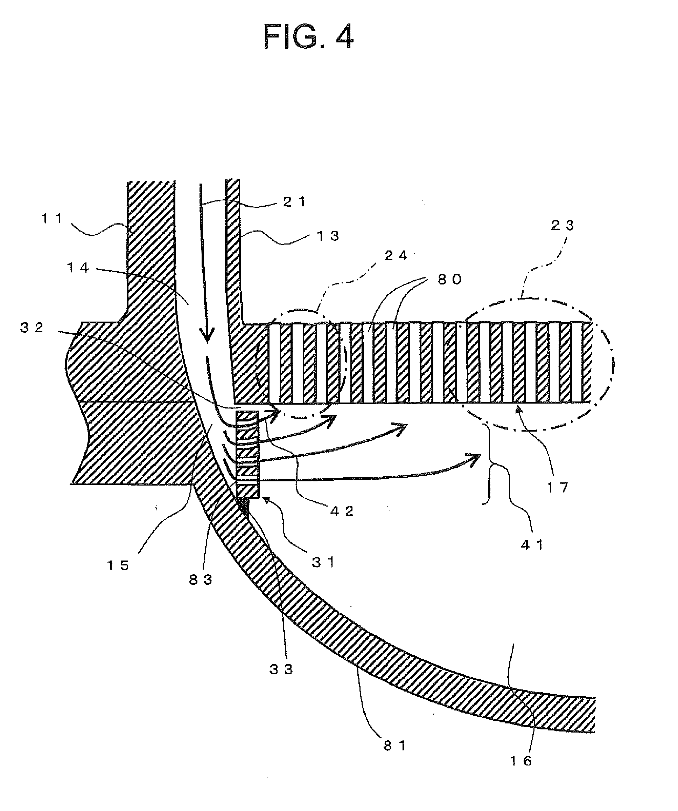

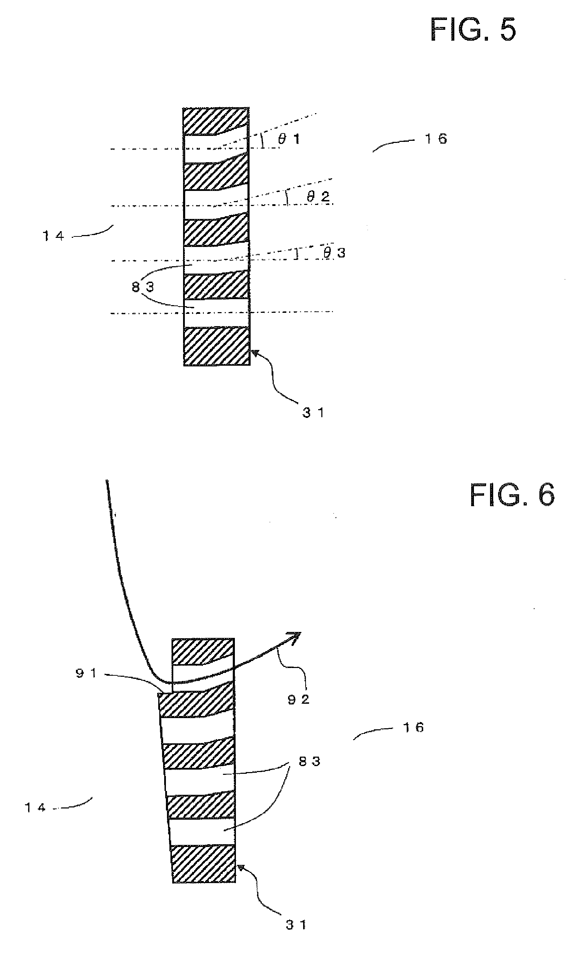

FIG. 4 is a fragmentary elevational cross-sectional view illustrating only a left side of an elevational cross section of a lower portion of the reactor pressure vessel of a second embodiment of the pressurized water reactor according to the present invention. FIG. 5 is an enlarged elevational cross-sectional view illustrating only a left side of an elevational cross section of a cylindrical porous plate of FIG. 4. The same reference numerals are given to the same or similar parts as those in the first embodiment, and the repeated description will be omitted.

In the second embodiment, the inclination angle of each of the inward flow holes 83 of the cylindrical porous plate 31 on the lower plenum 16 side (inner side) is changed in accordance with the height position of each of the inward flow holes 83. That is, the inclination angle of the uppermost inward flow holes 83 of the cylindrical porous plate 31 on the inner side is θ1, and the inclination angle becomes smaller (to θ2, 03, ···) as the height position becomes lower, and finally, the inclination angle of the lowermost inward flow hole 83 on the inner side is zero. Other configurations are the same as those of the first embodiment.

In the thus configured second embodiment, as is clear from a flow 41 of FIG. 4, the coolant that has passed through the inward flow holes 83 located at an upper portion of the cylindrical porous plate 31 can be made to easily flow into the lower ends of the upward flow holes 80 located at the peripheral portion 24, and the coolant that has passed through the inward flow holes 83 located at a lower portion can be made to flow farther toward the upward flow holes 80 located near the center portion 23. By adjusting the angles of the respective inward flow holes 83 in this manner, it is possible to suppress a reduction in the flow rate of the coolant to be supplied to the fuel assemblies located at the peripheral portion and to uniformize the core inlet flow rate distribution.

### (THIRD EMBODIMENT)

FIG. 6 is an enlarged elevational cross-sectional view illustrating only a left side of an elevational cross section of a cylindrical porous plate of a third embodiment of the pressurized water reactor according to the present invention. The third embodiment is a modification of the second embodiment, so the same reference numerals are given to the same or similar parts as those in the second embodiment, and the repeated description will be omitted.

In the third embodiment, a stepped surface 91 having substantially a constant height is provided on the downcomer 14 side surface, i.e., outer side surface of the cylindrical porous plate 31. In the example of FIG. 6, the lower end of the uppermost inward flow hole 83 and the stepped surface 91 are made to be flush with each other in height. Other configurations are the same as those of the second embodiment.

In the thus configured present embodiment, when part of the flow going down in the downcomer 14 collides with the protruding stepped surface 91 as denoted by a flow line 92 in FIG. 6, it is guided to the uppermost inward flow hole 83. As described above, making the lower end of the uppermost inward flow hole 83 and the stepped surface 91 be flush with each other in height allows the flow to be smoothly guided to the uppermost inward flow hole 83. Thus, by forming the stepped surface 91, it is possible to guide a larger flow rate of the coolant to the uppermost inward flow holes 83 than in a case where the stepped surface 91 is not formed.

It has been found that the larger a width of the stepped surface 91, the larger the effect of increasing an amount of the coolant that can be guided to the uppermost inward flow holes 83 and that when the width thereof falls below 20% of a hole diameter of each inward flow hole 83, the effect becomes limited. Thus, the width of the stepped surface is preferably equal to or more than 20 percent of the hole diameter.

Further, in the present embodiment, the inward flow holes 83 have the same configuration in terms of the hole shape as that of the inward flow holes 83 according to the second embodiment, which allows not only the increase in the volume of the coolant to be supplied to the fuel assemblies at the peripheral portion but also flexible increase/ decrease in the flow rate of the coolant at a target radial direction position.

### (FOURTH EMBODIMENT)

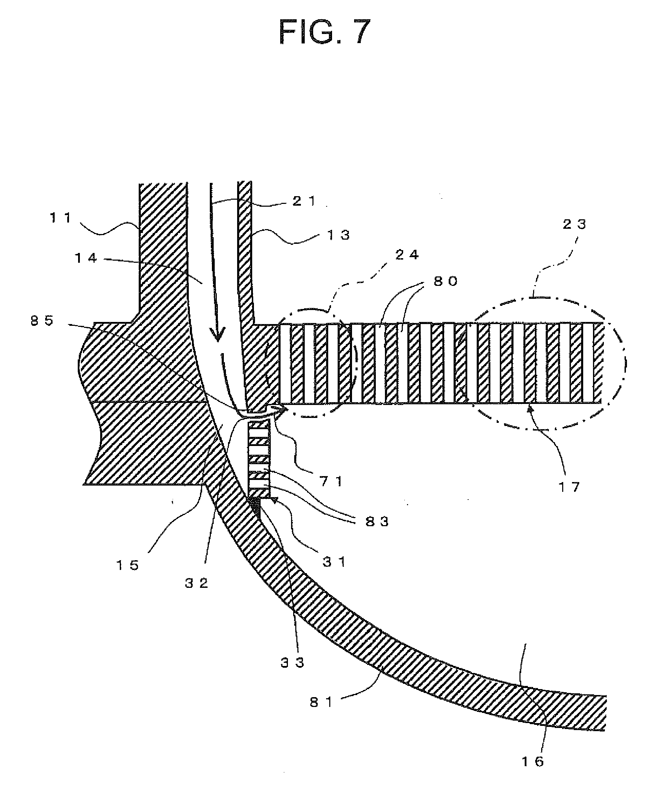

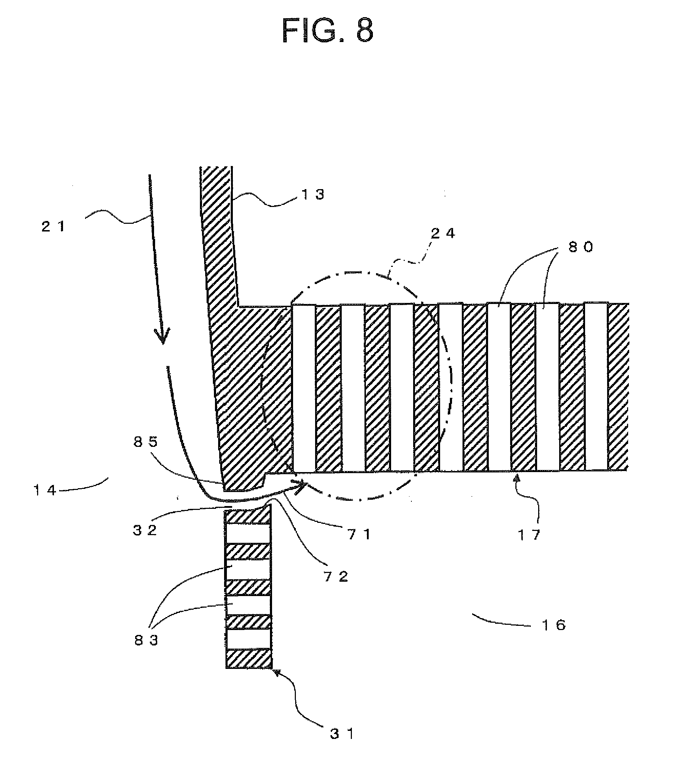

FIG. 7 is a fragmentary elevational cross-sectional view illustrating only a left side of an elevational cross section of a lower portion of the reactor pressure vessel of a fourth embodiment of the pressurized water reactor according to the present invention. FIG. 8 is an enlarged elevational cross-sectional view illustrating only a left side of an elevational cross section of a cylindrical porous plate of FIG. 7. In the description of the fourth embodiment, the same reference numerals are given to the same or similar parts as those in the first to third embodiments, and the repeated description will be omitted.

In the present embodiment, an annular protrusion 85 protruding downward is formed in the vicinity of the outer periphery of the lower core support plate 17. The upper end surface 72 of the cylindrical porous plate 31 faces the lower end surface of the annular protrusion 85 with an annular gap 32 interposed therebetween. A part of the upper end surface 72 of the cylindrical porous plate 31 located near the lower plenum 16 is inclined upward toward the lower plenum 16 side. Correspondingly, a part of the lower end surface of the annular protrusion 85 located near the lower plenum 16 is inclined upward toward the lower plenum 16 side. Thus, the gap 32 has substantially a constant vertical width over the entire length thereof.

In the present embodiment, the inward flow holes 83 of the cylindrical porous plate 31 each extend horizontally in a linear manner, as in the conventional technique illustrated in FIG. 12.

In the present embodiment, a part of the gap 32 located near the lower plenum 16 is inclined upward toward the lower plenum 16, so that a flow 71 of the coolant toward the upward flow holes 80 of the lower core support plate 17 located at the peripheral portion 24 becomes smooth. Further, formation of the annular protrusion 85 in the lower core support plate 17 causes the gap 32 to be vertically distanced downward from the entrance portions, i.e., lower end portions of the upward flow holes 80 of the lower core support plate 17, thereby alleviating the Venturi effect due to traverse flow of the coolant that has passed through the gap 32 to flow in the lower plenum 16. This accelerates the flow of the coolant to the upward flow holes 80 of the lower core support plate 17 located at the peripheral portion 24.

### (FIFTH EMBODIMENT)

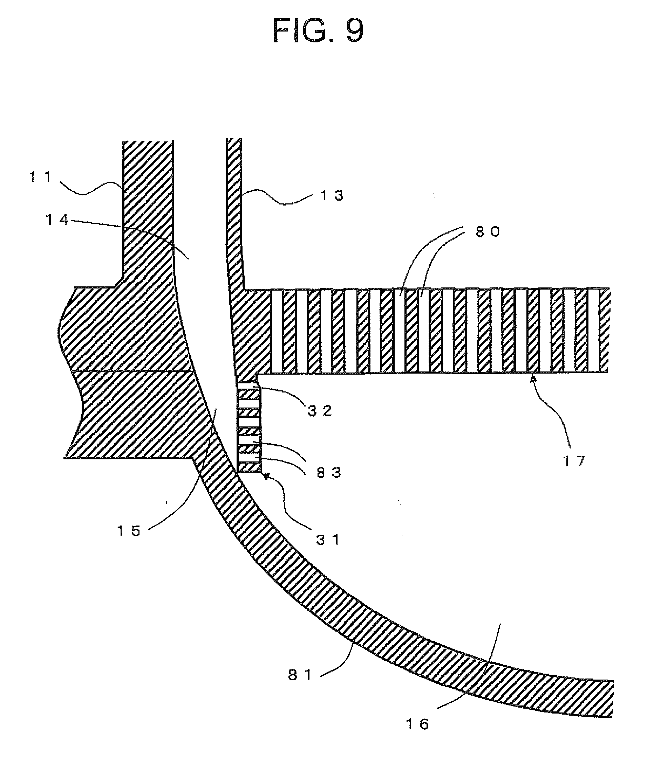

FIG. 9 is a fragmentary elevational cross-sectional view illustrating only a left side of an elevational cross section of a lower portion of the reactor pressure vessel of a fifth embodiment of the pressurized water reactor according to the present invention.

The fifth embodiment is a modification of the fourth embodiment, so the same reference numerals are given to the same or similar parts as those in the fourth embodiment, and the repeated description will be omitted.

In the above first to fourth embodiments, the cylindrical porous plate 31 is supported by the bottom portion 81 of the reactor pressure vessel 11 through the support member 33. In the fifth embodiment, an upper surface of the cylindrical porous plate 31 is fixed to the lower surface of the lower core support plate 17 and hung therefrom. In fixation, the upper end surface of the cylindrical porous plate 31 is extended upward at several discrete points by a height of the gap 32 and welded by a groove weld to contact portions on the lower core support plate 17.

In the thus configured present embodiment, uncertainty about the height of the gap 32 is reduced to make it possible to ascertain the effect described in the fourth embodiment that improves a reduction in the flow rate of the coolant to be supplied to the fuel assemblies located at the peripheral portion.

### (SIXTH EMBODIMENT)

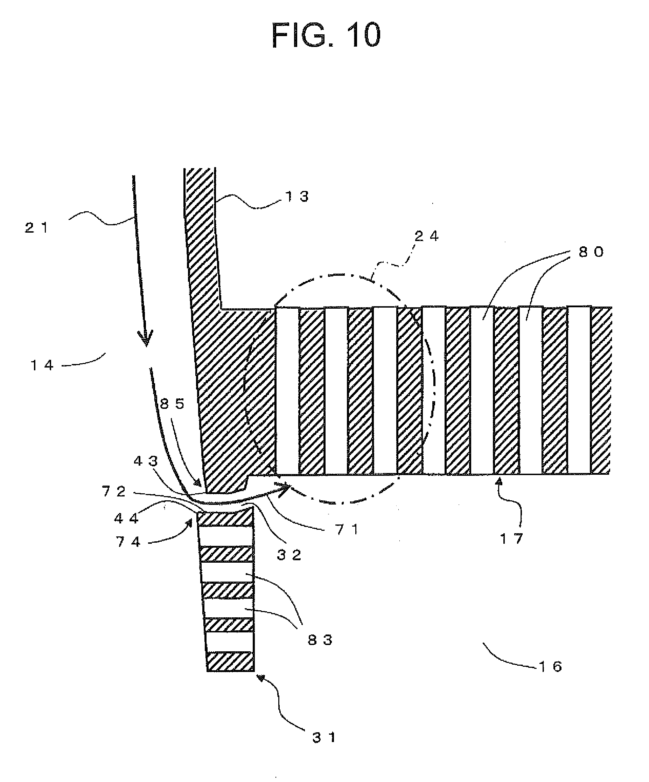

FIG. 10 is a fragmentary elevational cross-sectional view illustrating only a left side of an elevational cross section around a cylindrical porous plate of a sixth embodiment of the pressurized water reactor according to the present invention.

The sixth embodiment is a modification of the fourth embodiment, so the same reference numerals are given to the same or similar parts as those in the fourth embodiment, and the repeated description will be omitted.

In the present embodiment, a corner portion 44 of the entrance of the gap at the lower portion of the entrance of the gap protrude toward the downcomer 14 side (radial direction outer side) from a corner portion 43 at the upper portion of the entrance of the gap 32. Thus, a protrusion portion 74 having an upper surface with a constant height is formed on the flow-in side of the gap 32. Other configurations are the same as those of the fourth embodiment.

According to the thus configured present embodiment, a part of the flow 21 going down in the downcomer 41 collides with the protrusion portion 74, and the resultant flow is guided to the gap 32. Thus, it is possible to guide a larger flow rate of the coolant to the gap 32 than in a case where the protrusion portion is not formed. Further, the same effect as that of the fourth embodiment can be obtained.

It has been found that the larger the width of the protrusion, the larger the effect becomes and that when the width thereof falls below 20% of the gap height, the effect becomes limited. Thus, the width of the protrusion is preferably equal to or more than 20% of the gap height. By adjusting the width of the protrusion at a design time, it is possible to properly control the volume of the flow to be supplied to the fuel assemblies at the peripheral portion.

### (OTHER EMBODIMENTS)

In the first embodiment (FIG. 3), the downcomer 14 side of each of the inward flow holes 83 of the cylindrical porous plate 31 extends horizontally. Alternatively, however, the downcomer 14 side of each of the inward flow holes 83 may be inclined upward toward the lower plenum 16 provided that the inclination angle thereof is smaller than the lower plenum 16 side inclination angle. Further alternatively, the downcomer 14 side of each of the inward flow holes 83 may be inclined downward toward the lower plenum 16.

Further, in the first embodiment, the inward flow holes 83 each need not be bent in the middle thereof provided that they are each inclined upward toward the lower plenum 16.

In the third embodiment (FIG. 6), the stepped surface is provided only in the uppermost inward flow hole 83. Alternatively, however, the stepped surface may be provided in another position. Further alternatively, the stepped surface may be provided in a plurality of height positions.

Features of the above embodiments may be combined.

For example, in the third embodiment (FIG. 6), the inclination angle of each of the inward flow holes 83 of the cylindrical porous plate 31 on the lower plenum 16 side (inner side) is changed in accordance with a height position of each of the inward flow holes 83 as in the second embodiment (FIG. 5). Alternatively, however, as in the first embodiment (FIG. 3), the inclination angle of each of the inward flow holes 83 of the cylindrical porous plate 31 on the lower plenum 16 side may be made constant irrespective of the height position. Further alternatively, each of the inward flow holes 83 of the cylindrical porous plate 31 on the lower plenum 16 side may be made to extend horizontally.

In the fourth to sixth embodiments, each of the inward flow holes 83 is made to extend horizontally as in the conventional technique (FIG. 12). Alternatively, however, when each of the inward flow holes 83 is made to be inclined as in any of the first to third embodiments, additional effect can be obtained.

Although the cylindrical porous plate 31 and the reactor pressure vessel 11 are each formed into a circular cylindrical shape in each of the above embodiments, they may be formed not only into the circular cylindrical shape but also into a cylindrical shape having a horizontal cross section of an ellipsoidal shape.

Although the embodiments of the present invention have been described above, the embodiments are merely illustrative and do not limit the scope of the present invention. These novel embodiments can be practiced in other various forms, and various omissions, substitutions and changes may be made without departing from the scope of the invention. The embodiments and modifications thereof are included in the scope or spirit of the present invention and in the appended claims and their equivalents.

### EXPLANATION OF SYMBOLS

11: Reactor pressure vessel
12: Inlet nozzle
13: Core barrel
14: Downcomer
15: Lower plenum entrance
16: Lower plenum
17: Lower core support plate
18: Core
19: Upper plenum
23: Center portion
24: Peripheral portion
31: Cylindrical porous plate
32: Gap
33: Support member
43: Corner portion
44: Corner portion
50: Outlet nozzle
51: Swirl suppression plate
72: Upper end surface
74: Protrusion portion
80: Upward flow hole
81: Bottom portion
83: Inward flow hole
85: Annular protrusion
88: Lid
91: Stepped surface

## Claims

1. A pressurized water reactor comprising:
a cylindrical reactor pressure vessel with its axis extending in a vertical direction, the reactor pressure vessel including a vessel bottom portion protruding downward and an inlet nozzle mounted to a side surface thereof;
a cylindrical core barrel provided in the reactor pressure vessel so as to form an annular downcomer between itself and an inner side surface of the reactor pressure vessel;
a core disposed in the core barrel;
a lower core support plate provided below the core so as to spread horizontally across a lower portion of the core barrel and having a large number of upward flow holes formed therein; and
a cylindrical porous plate disposed as a partition between a lower plenum contacting the vessel bottom portion and a bottom portion of the downcomer and having a plurality of inward flow holes each serving as a flow path from the bottom portion of the downcomer to the lower plenum,
at least some of the inward flow holes being inclined at least upward toward the lower plenum on a side at which they are opened to the lower plenum.

2. The pressurized water reactor according to claim 1, wherein
at least some of the inward flow holes are changed in inclination in a middle thereof to be inclined upward toward the lower plenum on the side at which they are opened to the lower plenum more than on a side at which they are opened to the downcomer.

3. The pressurized water reactor according to claim 1 or claim 2, wherein
the higher a position of the inward flow hole in the cylindrical porous plate, the larger the inclination of the inward flow hole on the side at which they are opened to the lower plenum.

4. The pressurized water reactor according to claim 1 or claim 2, wherein
the cylindrical porous plate has a step protruding toward the downcomer side and extending in a peripheral direction.

5. A pressurized water reactor comprising:
a cylindrical reactor pressure vessel with its axis extending in a vertical direction, the reactor pressure vessel including a vessel bottom portion protruding downward and an inlet nozzle mounted to a side surface thereof;
a cylindrical core barrel provided in the reactor pressure vessel so as to form an annular downcomer between itself and an inner side surface of the reactor pressure vessel;
a core disposed in the core barrel;
a lower core support plate provided below the core so as to spread horizontally across a lower portion of the core barrel and having a large number of upward flow holes formed therein; and
a cylindrical porous plate disposed as a partition between a lower plenum contacting the vessel bottom portion and a bottom portion of the downcomer and having a plurality of inward flow holes each serving as a flow path extending from the bottom portion of the downcomer to the lower plenum,
the cylindrical porous plate having a step protruding toward the downcomer side and extending in a peripheral direction.

6. The pressurized water reactor according to claim 4, wherein,
a plurality of the inward flow holes are formed on both upper and lower sides of the step.

7. The pressurized water reactor according to claim 4, wherein
at least some of the inward flow holes are formed at a same height as the step.

8. The pressurized water reactor according to claim 1 or claim 2, wherein
an annular gap extending horizontally so as to serve as a flow path from the bottom portion of the downcomer to the lower plenum is formed between the lower core support plate and an upper end portion of the cylindrical porous plate, and
at least the lower plenum side of the gap is inclined upward toward the lower plenum.

9. A pressurized water reactor comprising:
a cylindrical reactor pressure vessel with its axis extending in a vertical direction, the reactor pressure vessel including a vessel bottom portion protruding downward and an inlet nozzle mounted to a side surface thereof;
a cylindrical core barrel provided in the reactor pressure vessel so as to form an annular downcomer between itself and an inner side surface of the reactor pressure vessel;
a core disposed in the core barrel;
a lower core support plate provided below the core so as to spread horizontally across a lower portion of the core barrel and having a large number of upward flow holes formed therein; and
a cylindrical porous plate disposed as a partition between a lower plenum contacting the vessel bottom portion and a bottom portion of the downcomer and having a plurality of inward flow holes each serving as a flow path extending from the bottom portion of the downcomer to the lower plenum, and wherein
an annular gap extending horizontally so as to serve as a flow path from the bottom portion of the downcomer to the lower plenum is formed between the lower core support plate and an upper end portion of the cylindrical porous plate, and
at least the lower plenum side of the gap is inclined upward toward the lower plenum.

10. The pressurized water reactor according to claim 8, wherein
the lower core support plate has an annular protrusion protruding downward toward the upper end portion of the cylindrical porous plate.

11. The pressurized water reactor according to claim 8, wherein
the cylindrical porous plate is supported by the lower core support plate.

12. The pressurized water reactor according to claim 8, wherein
an outer periphery of the upper end portion of the cylindrical porous plate protrudes outward from an outer periphery of a lower end portion of the lower core support plate.

13. A pressurized water reactor comprising:
a cylindrical reactor pressure vessel with its axis extending in a vertical direction, the reactor pressure vessel including a vessel bottom portion protruding downward and an inlet nozzle mounted to a side surface thereof;
a cylindrical core barrel provided in the reactor pressure vessel so as to form an annular downcomer between itself and an inner side surface of the reactor pressure vessel;
a core disposed in the core barrel;
a lower core support plate provided below the core so as to spread horizontally across a lower portion of the core barrel and having a large number of upward flow holes formed therein; and
a cylindrical porous plate disposed as a partition between a lower plenum contacting the vessel bottom portion and a bottom portion of the downcomer and having a plurality of inward flow holes each serving as a flow path extending from the bottom portion of the downcomer to the lower plenum, and wherein
an annular gap extending horizontally so as to serve as a flow path from the bottom portion of the downcomer to the lower plenum is formed between the lower core support plate and an upper end portion of the cylindrical porous plate, and
an outer periphery of the upper end portion of the cylindrical porous plate protrudes outward from an outer periphery of a lower end portion of the lower core support plate.
